# EUROPEAN PATENT SPECIFICATION

(11) **EP 4 131 104 B1**
(45) Date of publication and mention of the grant of the patent: **26.03.2025**
(21) Application number: 21828776.1
(22) Date of filing: 14.05.2021
(51) Int. Cl.: G06Q 10/08

(54) **ARTICLE RETRIEVAL METHOD AND APPARATUS, DEVICE AND STORAGE MEDIUM**
VERFAHREN UND VORRICHTUNG ZUM WIEDERAUFFINDEN VON ARTIKELN, VORRICHTUNG UND SPEICHERMEDIUM
PROCÉDÉ ET APPAREIL DE DE RÉCUPÉRATION D'ARTICLES, DISPOSITIF ET SUPPORT DE STOCKAGE

(30) Priority: 23.06.2020 CN 202010583124
(43) Date of publication of application: 08.02.2023
(73) Proprietor: Beijing Jingdong Zhenshi Information Technology Co., Ltd., Beijing, Beijing 100086 (CN)
(72) Inventor: ZHU, Wei, Beijing 100086 (CN)
(74) Representative: Prinz & Partner mbB
(86) International application number: PCT/CN2021/093856
(87) International publication number: WO 2021/258909

(56) References cited:
- CA-A1- 2 441 053
- CN-A- 107 230 120
- CN-A- 108 022 064
- CN-A- 111 784 240
- US-A1- 2013 198 042
- US-A1- 2017 270 470

## Description

This present disclosure claims priority to Chinese Patent Application No. 202010583124.2 filed with the China National Intellectual Property Administration (CNIPA) on Jun. 23, 2020.

### TECHNICAL FIELD

Embodiments of the present application relate to logistics technologies, for example, an item ex-warehouse method and apparatus, a device and a storage medium.

### BACKGROUND

Along with the development of e-commerce technology and a logistics technology, a user acquires items through an e-commerce platform, and a background e-commerce system generates an item acquisition task (such as a shopping order generated when the user places an order) according to an item acquisition operation of the user and sends the item acquisition task to a warehouse management system (WMS). The WMS generates an ex-warehouse task (such as an ex-warehouse order) according to the item acquisition task and performs an ex-warehouse operation in a warehouse according to the ex-warehouse task. Then, ex-warehouse packages are delivered to the user through the transfer of an express delivery station.

In the above-described process, due to the fact that an item value attribute value is reduced (such as commodity price reduction) or an additional value attribute value (such as a discount coupon) for reducing the item value attribute value is not reasonably used, the user may trigger a cancel operation (such as trigger an item return operation) of the item acquisition task at any time before items are delivered, and therefore an item acquisition task (such as reordering) containing the same item information is regenerated. Aiming at this situation, the WMS needs to perform ex-warehouse and delivery processes again according to a newly generated item acquisition task, and ex-warehoused items need to be returned to the warehouse through the express delivery station for an in-warehouse processing.

In a process of implementing the present application, the inventor finds that at least the following problems exist in the related art: for the same items, due to the cancel operation and regeneration operation of the item acquisition task of the user, the WMS needs to repeatedly perform the ex-warehouse operation, and the ex-warehoused items need to be returned to the warehouse for the in-warehouse processing, whereby the ex-warehouse efficiency of the items is reduced, and the operation cost of the warehouse is increased.

Document US2017/270470 A1 relates to an item ex-warehouse method.

Document CA 2 441 053 A1 discloses a method and system for efficient bulk package delivery.

### SUMMARY

Embodiments of the present disclosure provide an item ex-warehouse method and apparatus, a device and a storage medium, so as to improve the efficiency of item ex-warehouse and reduce the operation cost of the warehouse.

In a first aspect, an embodiment of the present application provides an item ex-warehouse method. The item ex-warehouse method includes the following: receiving and recording virtual warehouse location in-warehouse information of an item in a package stored at an express delivery station based on a cancel instruction of a first item acquisition task that is triggered by a user and is monitored and based on a determination result that the package corresponding to the first item acquisition task is in an undelivered state, where the express delivery station is used as a virtual warehouse location in a main warehouse where an item is initially ex-warehoused; determining to ex-warehouse the item from the virtual warehouse location based on a generation instruction of a second item acquisition task that is triggered by the user and is monitored and based on a determination result that it is determined that the second item acquisition task includes the item and a package transportation route corresponding to the second item acquisition task includes the express delivery station; and associating the item in the virtual warehouse location with the second item acquisition task, and associating virtual warehouse location ex-warehouse information of the item with the second item acquisition task.

In a second aspect, an embodiment of the present application further provides an item ex-warehouse apparatus. The apparatus includes an item storage module, an item ex-warehouse module and an information association module. The item storage module is configured to receive and record virtual warehouse location in-warehouse information of an item in a package stored at an express delivery station based on a cancel instruction of a first item acquisition task that is triggered by a user and is monitored and based on a determination result that the package corresponding to the first item acquisition task is in an undelivered state, where the express delivery station is used as a virtual warehouse location in a main warehouse where an item is initially ex-warehoused. The item ex-warehouse module is configured to determine to ex-warehouse the item from the virtual warehouse location based on a generation instruction of a second item acquisition task that is triggered by the user and is monitored and based on a determination result that it is determined that the second item acquisition task includes the item and a package transportation route corresponding to the second item acquisition task includes the express delivery station. The information association module is configured to associate the item in the virtual warehouse location with the second item acquisition task, and associate virtual warehouse location ex-warehouse information of the item with the second item acquisition task.

In a third aspect, an embodiment of the present application further provides an item ex-warehouse method. The item ex-warehouse method includes the following: triggering a cancel instruction of a first item acquisition task to enable a warehouse management system to receive and record virtual warehouse location in-warehouse information of an item in a package stored at an express delivery station based on a cancel instruction of a first item acquisition task that is triggered by a user and is monitored and based on a determination result that the package corresponding to the first item acquisition task is in an undelivered state, where the express delivery station is used as a virtual warehouse location in a main warehouse where an item is initially ex-warehoused; triggering a generation instruction of a second item acquisition task to enable the warehouse management system to determine to ex-warehouse the item from the virtual warehouse location based on a generation instruction of a second item acquisition task that is triggered by the user and is monitored and based on a determination result that it is determined that the second item acquisition task includes the item and a package transportation route corresponding to the second item acquisition task includes the express delivery station, associate the item in the virtual warehouse location with the second item acquisition task, and associate virtual warehouse location ex-warehouse information of the item with the second item acquisition task.

In a fourth aspect, an embodiment of the present application further provides a user terminal apparatus. The user terminal apparatus includes a first user operation module and a second user operation module. The first user operation module is configured to trigger a cancel instruction of a first item acquisition task to enable a warehouse management system to receive and record virtual warehouse location in-warehouse information of an item in a package stored at an express delivery station based on a cancel instruction of a first item acquisition task that is triggered by a user and is monitored and based on a determination result that the package corresponding to the first item acquisition task is in an undelivered state, where the express delivery station is used as a virtual warehouse location in a main warehouse where an item is initially ex-warehoused. The second user operation module is configured to trigger a generation instruction of a second item acquisition task to enable the warehouse management system to determine to ex-warehouse the item from the virtual warehouse location based on a generation instruction of a second item acquisition task that is triggered by the user and is monitored and based on a determination result that it is determined that the second item acquisition task includes the item and a package transportation route corresponding to the second item acquisition task includes the express delivery station, associate the item in the virtual warehouse location with the second item acquisition task, and associate virtual warehouse location ex-warehouse information of the item with the second item acquisition task.

In a fifth aspect, an embodiment of the present application further provides an electronic device. The electronic device includes one or more processors and a storage apparatus configured to store one or more programs. The one or more programs, when executed by the one or more processors, cause the one or more processors to perform the item ex-warehouse method provided in the first aspect or the third aspect of the embodiments of the present application.

In a sixth aspect, an embodiment of the present application further provides a computer-readable storage medium. The computer-readable storage medium stores a computer program. The computer program, when executed by a processor, performs the item ex-warehouse method provided in the first aspect or the third aspect of the embodiments of the present application.

### BRIEF DESCRIPTION OF DRAWINGS

FIG. 1 is a flowchart of an item ex-warehouse method according to embodiment one of the present application;
FIG. 2 is a flowchart of an item ex-warehouse method according to embodiment two of the present application;
FIG. 3 is a structural diagram of an item ex-warehouse apparatus according to embodiment three of the present application;
FIG. 4 is a structural diagram of a user terminal apparatus according to embodiment four of the present application; and
FIG. 5 is a structural diagram of an electronic device according to embodiment five of the present application.

### DETAILED DESCRIPTION

The present application will be described below in conjunction with the drawings and embodiments.

### Embodiment one

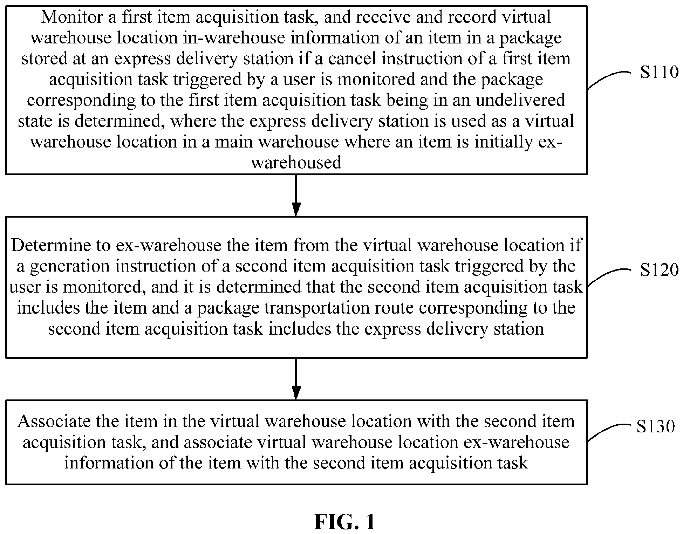

An item ex-warehouse method provided in this embodiment is applicable to a case for the item ex-warehouse where after a user cancels the previous item acquisition task and the acquired items are intercepted by an express delivery station before being delivered to the user, this user regenerates an item acquisition task for the same items with the same number, and an item transportation range covers the express delivery station. The method may be performed by an item ex-warehouse apparatus, the apparatus may be implemented by way of software and/or hardware, the apparatus may be integrated into an electronic device capable of running a warehouse management system, such as a laptop computer, a desktop computer, or a server. Referring to FIG. 1, the method of this embodiment includes the following.

In S110, a first item acquisition task is monitored, and if a cancel instruction of the first item acquisition task triggered by a user is monitored and a package corresponding to the first item acquisition task being in an undelivered state is determined, virtual warehouse location in-warehouse information of an item in the package stored at an express delivery station is received and recorded, where the express delivery station is used as a virtual warehouse location in a main warehouse where an item is initially ex-warehoused.

In an embodiment, the first item acquisition task refers to an item acquisition task (such as, a shopping order). The undelivered state refers to a state in which the express delivery package is ex-warehoused but not delivered to the user. The virtual warehouse location refers to a warehouse location that does not belong to a main warehouse but is uniformly managed by a warehouse management system. In the embodiment of the present application, one express delivery station is a virtual warehouse location. The virtual warehouse location in-warehouse information refers to in-warehouse information generated when the item is stored at the virtual warehouse location, and the virtual warehouse location in-warehouse information includes in-warehouse time, virtual warehouse location information, an item category identifier (such as a stock keeping unit (SKU)), a number of items and the like.

Before the express delivery package is not delivered to the user, the package is in an express non-delivered state, and the user may trigger a cancel operation of the first item acquisition task corresponding to the package at any time.

The WMS continuously monitors the first item acquisition task. If a cancel instruction is generated when a cancel operation of the first item acquisition task of the user is monitored, the WMS further determines whether an express delivery state of an express delivery package corresponding to the first item acquisition task is in a non-delivered state. If not, it is indicated that the express delivery package has been delivered to the user and cannot be intercepted, and the process is ended. If yes, the WMS notifies each express delivery station to intercept the package. If the package is successfully intercepted by a certain express delivery station, the successfully intercepted express delivery package is stored at the express delivery station for a period of time (such as 2-3 days), that is, the item in the first item acquisition task is in-warehoused into the express delivery station. The WMS receives the virtual warehouse location in-warehouse information which is sent by the express delivery station and indicates that the item is in-warehoused to the virtual warehouse location corresponding to the express delivery station, and records the virtual warehouse location in-warehouse information in warehouse storage record information corresponding to the virtual warehouse location.

It should be understood that the WMS needs to independently manage an entity warehouse location and a virtual warehouse location in order to distinguish the entity warehouse location in the main warehouse from the virtual warehouse location corresponding to the express delivery station so as to accurately position the item warehouse location and accurately record the item in-warehouse and ex-warehouse information in an ex-warehouse process, and the in-warehouse and ex-warehouse information of the related warehouse location are independently recorded. For example, when the item is stored at the virtual warehouse location or returned to the main warehouse, the WMS may record relevant in-warehouse and ex-warehouse information in the warehouse storage record information corresponding to the virtual warehouse location, but may not change the warehouse storage record information corresponding to the main warehouse. Similarly, when items are put in and put out of the main warehouse, the WMS may record relevant in-warehouse and ex-warehouse information in the warehouse storage record information corresponding to the main warehouse, but the WMS may not change the warehouse storage record information corresponding to the virtual warehouse location.

In S120, if a generation instruction of a second item acquisition task triggered by the user is monitored, and it is determined that the second item acquisition task includes the item in the first item acquisition task and a package transportation route corresponding to the second item acquisition task includes the express delivery station is determined.

In an embodiment, the second item acquisition task is another item acquisition task distinct from the first item acquisition task. The package transportation route refers to a transportation route of the express delivery package from being ex-warehoused to being delivered to the user and may be composed of different express delivery stations passing between two addresses.

If the user places an order again after canceling the order, then the user triggers the generation operation of the second item acquisition task, and the WMS obtains the generation instruction corresponding to the generation operation by monitoring the order system and the user. At this time, the WMS needs to determine whether the second item acquisition task includes the item in the previous first item acquisition task (including the determination of whether the number of items is consistent). **If** yes, whether the package transportation route corresponding to the second item acquisition task passes through the above express delivery station is further determined, and if yes, the item is delivered from the express delivery station. Thus, a process that the items are repeatedly delivered from the main warehouse may be omitted, the items do not need to reversely return to the main warehouse for an in-warehouse operation, whereby the operation cost of the warehouse is saved, and the transportation process and transportation time for transporting the items from the main warehouse to the express delivery station may be omitted, the express delivery transportation cost is saved, and the transportation efficiency is improved. Therefore, the WMS determines that the above item in the second item acquisition task may be ex-warehoused from the virtual warehouse location.

Exemplarily, the step in which it is determined that the package transportation route corresponding to the second item acquisition task includes the express delivery station that: if a delivery address in the second item acquisition task is the same as a delivery address in the first item acquisition task, it is determined that the package transportation route corresponding to the second item acquisition task includes the express delivery station.

Alternatively, the step in which it is determined that the package transportation route corresponding to the second item acquisition task includes the express delivery station includes: the package transportation route corresponding to the second item acquisition task is determined according to a delivery address in the second item acquisition task and a main warehouse address; and if the express delivery station is in a coverage range of the package transportation route, it is determined that the package transportation route corresponding to the second item acquisition task includes the express delivery station.

Whether the package transportation route includes the express delivery station may be determined according to the delivery address (receiving address) in the first item acquisition task and the delivery address in the second item acquisition task. **If** the two delivery addresses are consistent, then the package transportation routes of the two item acquisition tasks are also consistent, and it may be determined that the package transportation route includes the express delivery station. **If** the two delivery addresses are inconsistent, then a package transportation route, such as each express delivery station, through which the item is delivered from the main warehouse and transported to the second delivery address is determined according to the main warehouse address and the delivery address in the second item acquisition task. If the determined express delivery stations include the express delivery station corresponding to the virtual warehouse location, then it is determined that the express delivery station is in the coverage range of the package transportation route and thus it is determined that the package transportation route includes the express delivery station. Through the arrangement manner, whether the express delivery station where the item is stored is consistent with a transportation route of the second item acquisition task may be rapidly determined according to two delivery addresses, whether the item is ex-warehoused from the virtual warehouse location may be determined more rapidly, whereby the ex-warehouse efficiency of the items is improved.

In S130, the item in the virtual warehouse location is associated with the second item acquisition task, and virtual warehouse location ex-warehouse information of the item is associated with the second item acquisition task.

In an embodiment, the virtual warehouse location ex-warehouse information refers to ex-warehouse information generated when the item is ex-warehouse from the virtual warehouse location, and the virtual warehouse location ex-warehouse information includes ex-warehouse time, virtual warehouse location information, an item category identifier, a number of items and the like.

After the WMS determines to ex-warehouse the items from the virtual warehouse location, the second item acquisition task is associated with the corresponding items in the virtual warehouse location. On one hand, the items may be locked and prevented from being subjected to operations, such as returning to the main warehouse or delivering to other orders, and on the other hand, the subsequent ex-warehouse and packaging operations of the items may be indicated, so that the ex-warehouse operation of the items is completed. In addition, the WMS further needs to associate the virtual warehouse location ex-warehouse information of the above items to the second item acquisition task for acquiring and displaying the logistics state information of the second item acquisition task, so that the user can know the package state in time.

As one example, due to a fact that the prices of the items are reduced or a discount coupon is not reasonably used, the user cancels the previous shopping order (corresponding to the first item acquisition task) and reorders the same items with the same number without changing the receiving address; after the user cancels the order, the ex-warehoused express delivery package is intercepted by the express delivery station and is temporarily stored at the express delivery station; for an ex-warehouse task of a new order (corresponding to the second item acquisition task), the WMS ex-warehouses the same items with the same number from the virtual warehouse location corresponding to the express delivery station because the item categories and the number of items included in the new order are the same as those included in the cancelled order and the receiving addresses are the same, and then the express delivery package of the new order is continuously delivered from the express delivery station. Therefore, the ex-warehouse efficiency of the items can be improved, the operation cost of the warehouse is reduced, the transportation time of ex-warehousing the items from the entity warehouse again and transporting the items to the express delivery station may be saved, the delivery speed of the items is increased, the time from ordering to delivering the items is shortened to a great extent for the user, and thus the user experience is improved.

According to the technical scheme of this embodiment, the first item acquisition task is monitored, and if the cancel instruction of the first item acquisition task triggered by the user is monitored and it is determined that the package corresponding to the first item acquisition task is in the undelivered state, the virtual warehouse location in-warehouse information of the item in the package stored at the express delivery station is received and recorded, where the express delivery station is used as the virtual warehouse location in the main warehouse where the item is initially ex-warehoused; if the generation instruction of the second item acquisition task triggered by the user is monitored, and it is determined that the second item acquisition task includes the item and the package transportation route corresponding to the second item acquisition task includes the express delivery station, the item being ex-warehoused from the virtual warehouse location is determined; and the item in the virtual warehouse location is associated with the second item acquisition task, and the virtual warehouse location ex-warehouse information of the item is associated with the second item acquisition task. In this way, the express delivery station is used as the virtual warehouse location to be added to the warehouse management system and stores items intercepted due to the fact that the order is cancelled by the user, and when the same user places an order again for the same items and a transportation range of a new order includes the previous express delivery station, the items are ex-warehoused from the virtual warehouse location, whereby the operations that the same ex-warehoused item is repeatedly ex-warehoused from the main warehouse and returned to the main warehouse are avoided, the ex-warehouse efficiency of the items is improved, the operation cost of the warehouse is saved, the transportation time for ex-warehousing the items from the main warehouse again and transporting the items to the express delivery station is saved, the delivery speed of the items is increased, and the time from ordering to delivering the items is shortened for the user, and the user experience is improved.

Based on the above technical schemes, after the item being ex-warehoused from the virtual warehouse location is determined, the method further includes that: in-warehouse information and ex-warehouse information of the item is recorded in warehouse storage record information corresponding to the main warehouse.

If the item included in the first item acquisition task is ex-warehoused from the virtual warehouse location, the actual in-warehouse operation and ex-warehouse operation cannot be performed on the item in the main warehouse. However, in order to ensure the balance of revenue and expenditure of real objects and the correctness of warehouse financial data, the WMS not only needs to record the ex-warehouse information of the items in the warehouse storage record information corresponding to the virtual warehouse position but also needs to perform the virtual-return and virtual-output operation of the items in the main warehouse, that is, the in-warehouse information and ex-warehouse information of the items are recorded in the warehouse storage record information corresponding to the main warehouse.

### Embodiment two

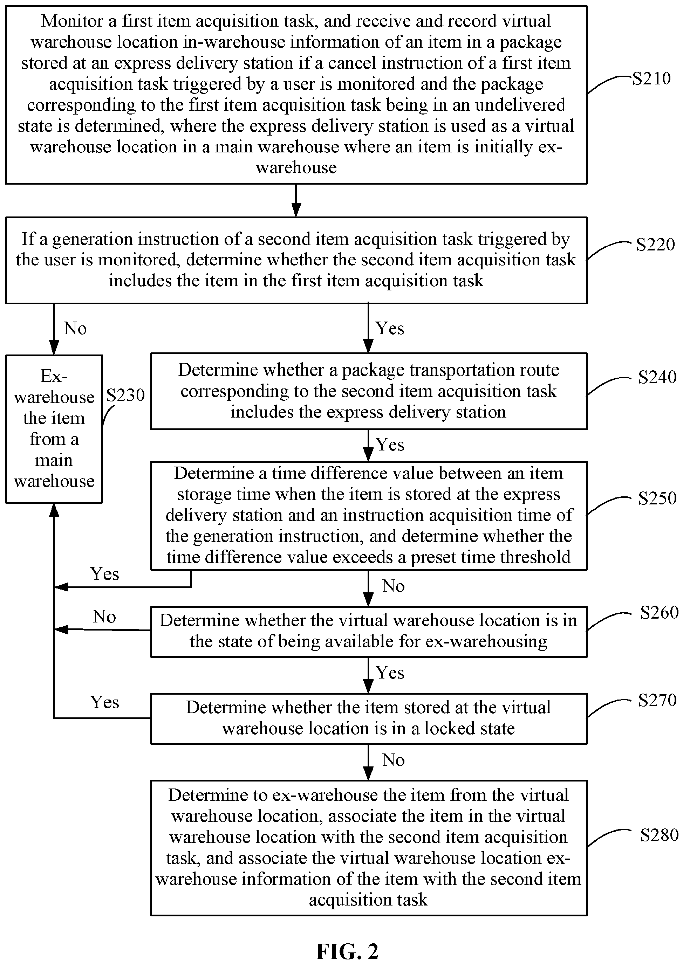

Based on the embodiment one, the related step of determining whether a time difference value exceeds a preset time threshold is added in this embodiment. Based on this, the step of determining whether the virtual warehouse location is in a state of being available for ex-warehousing may be added. Based on this, the step of determining whether the item is in a locked state may be added. Interpretations of terms that are the same as or corresponding to the above-described embodiment are not repeated here. Referring to FIG. 2, an item ex-warehouse method provided in this embodiment includes the following.

In S210, a first item acquisition task is monitored, and if a cancel instruction of the first item acquisition task triggered by a user is monitored and it is determined that a package corresponding to the first item acquisition task is in an undelivered state, virtual warehouse location in-warehouse information of an item in the package stored at an express delivery station is received and recorded, where the express delivery station is used as a virtual warehouse location in a main warehouse where an item is initially ex-warehoused.

In S220, if a generation instruction of a second item acquisition task triggered by the user is monitored, then whether the second item acquisition task includes the item in the first item acquisition task is determined.

If the second item acquisition task includes the item in the first item acquisition task, then S240 is performed; if the second item acquisition task does not include all of the items, S230 is performed.

In S230, the item is ex-warehoused from a main warehouse.

In S240, whether a package transportation route corresponding to the second item acquisition task includes the express delivery station is determined.

If the package transportation route corresponding to the second item acquisition task includes the express delivery station, then S250 is performed; and if the package transportation route corresponding to the second item acquisition task does not include the express delivery station, then S230 is performed.

In S250, a time difference value between an item storage time when the item is stored at the express delivery station and an instruction acquisition time of the generation instruction is determined, and whether the time difference value exceeds a preset time threshold is determined.

In an embodiment, the preset time threshold is a preset period that is determined by the storage time limit of the item in the virtual warehouse location, such as 2 to 3 days.

Because the items in the express delivery station are temporarily stored, the items have a set storage time limit. After the storage time limit is reached, the temporarily stored items need to be returned to the main warehouse. Therefore, before whether the item is ex-warehoused from the virtual warehouse location is determined, it needs to be determined whether the item is still stored at the virtual warehouse location.

During specific implementation, the time (namely, item storage time) when the item in the first item acquisition task is stored at the express delivery station is acquired, and the time (namely, the instruction obtaining time) when the generation instruction of the second item acquisition task is generated is monitored; then a time difference value between the item storage time and the instruction acquisition time is calculated. **If** the time difference value exceeds the preset time threshold, it is indicated that the item has been ex-warehoused from the virtual warehouse location and returned to the main warehouse, the item cannot be ex-warehoused from the virtual warehouse location, and S230 is performed. If the time difference value does not exceed the preset time threshold, it is indicated that the item is still stored at the virtual warehouse location, and whether the virtual warehouse location is in a state of being available for ex-warehousing is further determined, that is, S260 is performed.

In S260, whether the virtual warehouse location is in the state of being available for ex-warehousing is determined.

In an embodiment, the state of being available for ex-warehousing refers to a state that the virtual warehouse location starts the ex-warehouse function of the express delivery station.

After the express delivery station as the virtual warehouse location is added to the WMS, a warehouse location state, namely the state of being available for ex-warehousing or a state of being not available for ex-warehousing, of the virtual warehouse location corresponding to the express delivery station is determined according to whether the express delivery station has the ex-warehouse capability and whether other services affect the ex-warehouse operation. For example, if the express delivery station has the ex-warehouse capacity and no other services affect the ex-warehouse operation, then the warehouse location state of the virtual warehouse location corresponding to the express delivery station is the state of being available for ex-warehousing; otherwise, if the express delivery station does not have the ex-warehouse capacity or other services affect the ex-warehouse operation, then the warehouse location state of the virtual warehouse location corresponding to the express delivery station is the state of being not available for ex-warehousing. The state of being available for ex-warehousing and the state of being not available for ex-warehousing may be characterized by corresponding warehouse location state identifiers.

During specific implementation, the WMS may query the warehouse location state identifier corresponding to the virtual warehouse location. If the warehouse location state identifier is an available ex-warehousing identifier, then it is determined that the virtual warehouse location is in the state of being available for ex-warehousing, and then S270 is performed. If the warehouse location state identifier is an unavailable ex-warehousing identifier, then it is determined that the virtual warehouse location is in the state of being not available for ex-warehousing, and S230 is performed.

In S270, whether the item stored at the virtual warehouse location is in a locked state is determined.

In an embodiment, the locked state refers to a state in which the item cannot be ex-warehoused or in-warehoused. The locked state may be characterized by a locked identifier in the item state identifier.

The WMS queries the item state identifier of the item stored at the virtual warehouse location. If the item state identifier of a certain item is the locked identifier, it is indicated that the item is in the locked state and cannot be ex-warehoused from the virtual warehouse location, and if all the items stored at the virtual warehouse location cannot be ex-warehoused from the virtual warehouse location, S230 is performed. If the item state identifiers of the items are unlocked identifiers, it is indicated that the items are not in the locked state (or referred to as an unlocked state), then the items may be ex-warehoused from the virtual warehouse location, and then S280 is performed.

Exemplarily, before whether the item stored at the virtual warehouse location is in the locked state is determined, the method further includes that: whether an item state of the item is set to be in the locked state is determined according to at least one of the following: an item quality identifier corresponding to the item, a user exclusive identifier, or whether the item is associated with an item acquisition task.

In an embodiment, the item acquisition task referred to herein may be an item acquisition task other than the first item acquisition task and the second item acquisition task.

In an embodiment, the item quality identifier refers to an identifier of whether there is a problem in the quality of the item, such as a no quality problem identifier and a quality problem identifier. The user exclusive identifier refers to an identifier that the item is exclusive to a certain user, and may be obtained through related information carried in the item acquisition task. An item with the user exclusive identifier cannot be delivered to other users.

When a certain item is stored at the virtual warehouse location, an item quality identifier of the item and whether the item carries the user exclusive identifier need to be determined. If the item quality identifier is an identifier with a quality problem or carries the user exclusive identifier, then the item cannot be directly ex-warehoused from the virtual warehouse location and must be returned to the main warehouse, and thus the item state of the item is set to be the locked state. If the item is associated with an item acquisition task, it is indicated that the item is determined to be an item to be ex-warehoused from the virtual warehouse location and cannot be ex-warehoused anymore, then the item state of the item is set to the locked state. If the item quality identifier is an identifier with no quality problem, the item does not carry the user exclusive identifier and the item is not associated with an item acquisition task, then the item state of the item is set to be the unlocked state. In this way, it can be avoided that items that have quality problems and are exclusive to a specific user or items which are about to be ex-warehoused from the warehouse are delivered to other users, the serious problem that the items are mistakenly ex-warehoused from the warehouse is avoided, and the delivery efficiency is further improved.

In S280, the item being ex-warehoused from the virtual warehouse location is determined, the item in the virtual warehouse location is associated with the second item acquisition task, and the virtual warehouse location ex-warehouse information of the item is associated with the second item acquisition task.

It should be noted that the actual execution sequence of the following five determination steps: S220 and S240 to S270 may be changed as long as the determination processes of "whether the second item acquisition task includes the item in the first item acquisition task", "whether the package transportation route corresponding to the second item acquisition task includes the express delivery station", "whether the time difference value exceeds the preset time threshold", "whether the virtual warehouse location is in a state of being available for ex-warehousing" and "whether the item stored at the virtual warehouse location is in the locked state" are executed before S280.

According to the technical scheme of this embodiment, the time difference value between the item storage time when the item is stored at the express delivery station and the instruction acquisition time of the generation instruction is determined, if the time difference value does not exceed the preset time threshold, then the step of determining to ex-warehouse the item from the virtual warehouse location is triggered to be performed so that when the item is stored at the virtual warehouse location, the item is ex-warehoused from the virtual warehouse location, the mistaken ex-warehouse operation is avoided, and the ex-warehouse efficiency of the item is improved. If the virtual warehouse location is in the state of being available for ex-warehousing, then the step of determining to ex-warehouse the item from the virtual warehouse location is triggered to be performed. In this way, all express delivery stations are added to the WMS, and the service control of whether the express delivery stations perform the ex-warehouse operation is achieved through the change of the warehouse location state identifier, whereby the flexibility of the change of the virtual warehouse location in the WMS is improved, it is avoided that the item is ex-warehoused from the virtual warehouse location which is unavailable for ex-warehousing, the accuracy of the ex-warehouse of the items is improved, the expandability of the virtual warehouse location in the WMS is also improved, the virtual warehouse locations may be increased more conveniently, and the ex-warehouse efficiency is improved. If it is determined that the item stored at the virtual warehouse location is not in the locked state, the step of determining to ex-warehouse the item from the virtual warehouse location is triggered to be performed; therefore, items that cannot be ex-warehoused in the virtual warehouse location are prevented from being ex-warehoused, the probability of mistaken ex-warehouse is reduced, and thus the ex-warehouse efficiency of the items is improved.

### Embodiment three

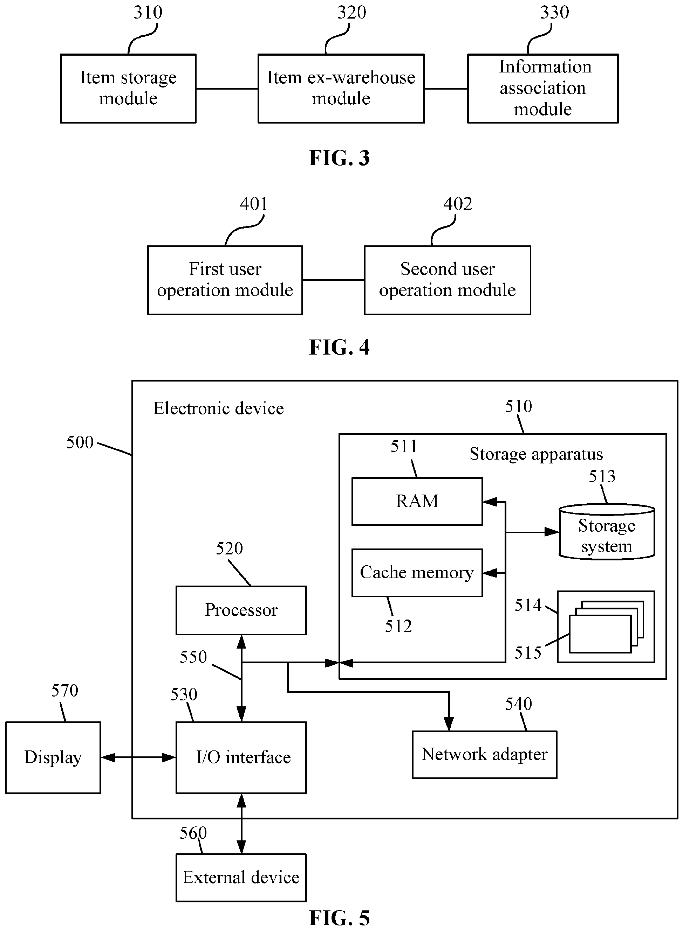

This embodiment provides an item ex-warehouse apparatus. Referring to FIG. 3, the apparatus includes an item storage module 310, an item ex-warehouse module 320 and an information association module 330. The item storage module 310 is configured to monitor a first item acquisition task, and receive and record virtual warehouse location in-warehouse information of an item in a package stored at an express delivery station if a cancel instruction of the first item acquisition task triggered by a user is monitored and the package corresponding to the first item acquisition task being in an undelivered state is determined, where the express delivery station is used as a virtual warehouse location in a main warehouse where an item is initially ex-warehoused. The item ex-warehouse module 320 is configured to determine to ex-warehouse the item from the virtual warehouse location if a generation instruction of a second item acquisition task triggered by the user is monitored and it is determined that the second item acquisition task includes the item and a package transportation route corresponding to the second item acquisition task includes the express delivery station. The information association module 330 is configured to associate the item in the virtual warehouse location with the second item acquisition task, and associate virtual warehouse location ex-warehouse information of the item with the second item acquisition task.

Optionally, based on the above-described apparatus, the apparatus further includes a time determination module. The time determination module is configured to determine a time difference value between an item storage time when the item is stored at the express delivery station and an instruction acquisition time of the generation instruction before the item being ex-warehoused from the virtual warehouse location is determined, and trigger performing the step of determining to ex-warehouse the item from the virtual warehouse location if the time difference value does not exceed a preset time threshold.

Optionally, based on the above-described apparatus, the apparatus further includes a warehouse location state determination module. The warehouse location state determination module is configured to trigger performing the step of determining to ex-warehouse the item from the virtual warehouse location if the virtual warehouse location is in a state of being available for ex-warehousing before the item being ex-warehoused from the virtual warehouse location is determined.

Optionally, based on the above-described apparatus, the apparatus further includes an item state determination module. The item state determination module is configured to trigger performing the step of determining to ex-warehouse the item from the virtual warehouse location if the item stored at the virtual warehouse location being not in the locked state is determined before the item being ex-warehoused from the virtual warehouse location is determined.

Optionally, based on the above-described apparatus, the apparatus further includes an item state setting module. The item state setting module is configured to before whether the item stored at the virtual warehouse location is in the locked state is determined, determine whether an item state of the item is set to be in a locked state according to at least one of the following: an item quality identifier corresponding to the item, a user exclusive identifier, or whether the item is associated with an item acquisition task.

Optionally, the item ex-warehouse module 320 is configured to determine that the package transportation route corresponding to the second item acquisition task includes the express delivery station if a delivery address in the second item acquisition task is the same as a delivery address in the first item acquisition task, or determine the package transportation route corresponding to the second item acquisition task according to a delivery address in the second item acquisition task and a main warehouse address; and determine that the package transportation route corresponding to the second item acquisition task includes the express delivery station if the express delivery station is in a coverage range of the package transportation route.

Optionally, based on the above-described apparatus, the apparatus further includes an information record module. The information record module is configured to record in-warehouse information and ex-warehouse information of the item in warehouse storage record information corresponding to the main warehouse after the item being ex-warehoused from the virtual warehouse location is determined.

According to the item ex-warehouse apparatus in the embodiment three of the present application, the express delivery station is used as the virtual warehouse location to be added to the warehouse management system, and stores items intercepted due to the fact that the order is cancelled by the user, and when the same user places an order again for the same items and a transportation range of a new order includes the previous express delivery station, the items are ex-warehoused from the virtual warehouse location, whereby the operations that the same ex-warehoused item is repeatedly ex-warehoused from the main warehouse and returned to the main warehouse are avoided, the ex-warehouse efficiency of the items is improved, the operation cost of the warehouse is saved, the transportation time for ex-warehousing the items from the main warehouse again and transporting the items to the express delivery station is saved, the delivery speed of the items is increased, and the time from ordering to delivering the items is shortened for the user, and the user experience is improved.

The item ex-warehouse apparatus provided in the embodiment of the present application may execute the item ex-warehouse method provided in any of the embodiments of the present application and has function modules and beneficial effects corresponding to the execution method.

It is be noted that in the embodiment of the item ex-warehouse apparatus described above, all the units and the modules included in the item ex-warehouse apparatus are divided according to functional logic, and corresponding functions can be achieved.

### Embodiment four

This embodiment provides a user terminal apparatus. Referring to FIG. 4, the user terminal apparatus includes a first user operation module 401 and a second user operation module 402. The first user operation module 401 is configured to trigger a cancel instruction of a first item acquisition task to enable a warehouse management system to receive and record virtual warehouse location in-warehouse information of an item in a package stored at an express delivery station based on a cancel instruction of a first item acquisition task that is triggered by a user and is monitored and based on a determination result that the package corresponding to the first item acquisition task is in an undelivered state, where the express delivery station is used as a virtual warehouse location in a main warehouse where an item is initially ex-warehoused. The second user operation module 402 is configured to trigger a generation instruction of a second item acquisition task to enable the warehouse management system to determine to ex-warehouse the item from the virtual warehouse location based on a generation instruction of a second item acquisition task that is triggered by the user and is monitored and based on a determination result that it is determined that the second item acquisition task includes the item and a package transportation route corresponding to the second item acquisition task includes the express delivery station, associate the item in the virtual warehouse location with the second item acquisition task, and associate virtual warehouse location ex-warehouse information of the item with the second item acquisition task.

It can be understood that the user may operate the user terminal apparatus to interact with the warehouse management system.

### Embodiment five

Referring to FIG. 5, this embodiment provides an electronic device 500, and the electronic device 500 includes one or more processors 520 and a storage apparatus 510 configured to store one or more programs. The one or more programs, when executed by the one or more processors 520, cause the one or more processors 520 to perform the item ex-warehouse method provided in the embodiments of the present application. The item ex-warehouse method includes that: a first item acquisition task is monitored, and if a cancel instruction of a first item acquisition task triggered by a user is monitored and a package corresponding to the first item acquisition task being in an undelivered state is determined, virtual warehouse location in-warehouse information of an item in the package stored at an express delivery station is received and recorded, where the express delivery station is used as a virtual warehouse location in a main warehouse where an item is initially ex-warehoused; if a generation instruction of a second item acquisition task triggered by the user is monitored, and it is determined that the second item acquisition task includes the item, and a package transportation route corresponding to the second item acquisition task includes the express delivery station, the item being ex-warehoused from the virtual warehouse location is determined; and the item in the virtual warehouse location is associated with the second item acquisition task, and virtual warehouse location ex-warehouse information of the item is associated with the second item acquisition task.

Of course, it should be understood by those skilled in the art that the processor 520 may also perform the technical scheme of the item ex-warehouse method provided in any of the embodiments of the present application.

In an embodiment, with respect to the electronic device 500, one or more programs, when executed by one or more processors 520, cause the one or more processors 520 to perform the item ex-warehouse method provided in the embodiments of the present application, and the item ex-warehouse method includes that: a cancel instruction of a first item acquisition task is triggered to enable a warehouse management system to receive and record virtual warehouse location in-warehouse information of an item in a package stored at an express delivery station based on a cancel instruction of a first item acquisition task that is triggered by a user and is monitored and based on a determination result that the package corresponding to the first item acquisition task is in an undelivered state, where the express delivery station is used as a virtual warehouse location in a main warehouse where an item is initially ex-warehoused; a generation instruction of a second item acquisition task is triggered to enable the warehouse management system to determine to ex-warehouse the item from the virtual warehouse location based on a generation instruction of a second item acquisition task that is triggered by the user and is monitored and based on a determination result that it is determined that the second item acquisition task includes the item and a package transportation route corresponding to the second item acquisition task includes the express delivery station, associate the item in the virtual warehouse location with the second item acquisition task, and associate virtual warehouse location ex-warehouse information of the item with the second item acquisition task.

It can be understood that the electronic device herein may be embodied as the user terminal apparatus in an implementation process.

As shown in FIG. 5, the electronic device 500 is represented in the form of a general-purpose computing device. The components of the electronic device 500 may include one or more processors 520, a storage apparatus 510, and a bus 550 that connects different system components (including the storage apparatus 510 and the processor 520).

The bus 550 represents one or more of several types of bus structures, including a memory bus or a memory controller, a peripheral bus, an accelerated graphics port, a processor, or a local bus using any of a variety of bus structures. Such architectures include, by way of example, an industry standard architecture (ISA) bus, a micro channel architecture (MCA) bus, an enhanced ISA bus, a video electronics standards association (VESA) local bus, and a peripheral component interconnect (PCI) bus.

The electronic device 500 typically includes a variety of computer system readable media. Such media may be any available media that can be accessed by the electronic device 500, and it includes both volatile and nonvolatile media, removable and non-removable media.

The storage apparatus 510 may include a computer system readable medium in the form of a volatile memory, such as a random access memory (RAM) 511 and/or a cache memory 512. The electronic device 500 may include other removable/non-removable, volatile/nonvolatile computer system storage media. By way of example only, the storage system 513 may be provided as a read-write non-removable, nonvolatile magnetic media (commonly referred to as a "hard drive"). Although not shown in FIG. 5, a magnetic disk drive configured to read from or write to a removable and nonvolatile magnetic disk (such as a "floppy disk") and an optical disk drive configured to read from or write to a removable and nonvolatile optical disk (such as a portable compact disc read-only memory (CD-ROM), a digital video disc read-only memory (DVD-ROM), or other optical media) may be provided. In these cases, each drive may be connected to the bus 550 by one or more data media interfaces. The storage apparatus 510 may include at least one program product having a group (such as, at least one) of program modules, and these program modules are configured to perform the functions of embodiments of the present application.

A program/utility 514 having a group (at least one) of program modules 515 may be stored at the storage apparatus 510 by way of example, such program modules 515 include an operating system, one or more application programs, other program modules, and program data, and each or some combinations of these examples may include an implementation of a network environment. The program module 515 generally performs the functions and/or methods in any of the embodiments described in the present application.

The electronic device 500 may also communicate with one or more external devices 560 (such as a keyboard, a pointing device, a display 570), one or more devices that enable a user to interact with the electronic device 500, and/or any devices (such as a network card, a modem) that enable the electronic device 500 to communicate with one or more other computing devices. Such communication may be performed through input/output interfaces (I/O interfaces) 530. Moreover, the electronic device 500 may communicate with one or more networks, such as a local area network (LAN), a wide area network (WAN), and/or a public Network (such as the internet) through a network adapter 540. As shown in FIG. 5, the network adapter 540 communicates with the other modules of the electronic device 500 over the bus 550. It should be understood that although not shown in FIG. 5, other hardware and/or software modules may be used in conjunction with the electronic device 500, including microcode, device drivers, redundant processing units, external disk drive arrays, redundant array of independent disks (RAID) systems, tape drives, and data backup storage systems.

The processor 520 executes programs stored at the storage apparatus 510 to perform various functional applications and data processing, for example, to perform the item ex-warehouse method provided in the embodiments of the present application.

### Embodiment five

This embodiment provides a storage medium including a computer-executable instruction, and the computer-executable instruction, when executed by a processor of a computer, performs an item ex-warehouse method, and the method includes that: a first item acquisition task is monitored, and if a cancel instruction of a first item acquisition task triggered by a user is monitored and a package corresponding to the first item acquisition task being in an undelivered state is determined, virtual warehouse location in-warehouse information of an item in the package stored at an express delivery station is received and recorded, where the express delivery station is used as a virtual warehouse location in a main warehouse where an item is initially ex-warehoused; if a generation instruction of a second item acquisition task triggered by the user is monitored, and it is determined that the second item acquisition task includes the item, and a package transportation route corresponding to the second item acquisition task includes the express delivery station, the item being ex-warehoused from the virtual warehouse location is determined; and the item in the virtual warehouse location is associated with the second item acquisition task, and virtual warehouse location ex-warehouse information of the item is associated with the second item acquisition task.

In an embodiment, the computer-executable instruction, when executed by a processor of a computer, performs an item ex-warehouse method, and the method includes that: a cancel instruction of a first item acquisition task is triggered to enable a warehouse management system to receive and record virtual warehouse location in-warehouse information of an item in a package stored at an express delivery station based on a cancel instruction of a first item acquisition task that is triggered by a user and is monitored and based on a determination result that the package corresponding to the first item acquisition task is in an undelivered state, where the express delivery station is used as a virtual warehouse location in a main warehouse where an item is initially ex-warehoused; a generation instruction of a second item acquisition task is triggered to enable the warehouse management system to determine to ex-warehouse the item from the virtual warehouse location based on a generation instruction of a second item acquisition task that is triggered by the user and is monitored and based on a determination result that it is determined that the second item acquisition task includes the item and a package transportation route corresponding to the second item acquisition task includes the express delivery station, associate the item in the virtual warehouse location with the second item acquisition task, and associate virtual warehouse location ex-warehouse information of the item with the second item acquisition task.

Of course, for a storage medium including a computer-executable instruction provided in the embodiment of the present application, the computer-executable instruction thereof is not limited to the above method operations, but may also perform related operations in the item ex-warehouse method provided in any of the embodiments of the present application.

The computer storage medium of the embodiment of the present application may adopt any combination of one or more computer-readable media. The computer-readable medium may be a computer-readable signal medium or a computer-readable storage medium. The computer-readable storage medium may be, for example, an electronic, magnetic, optical, electromagnetic, infrared, or semiconductor system, apparatus, or device, or any combination of the foregoing. More specific examples (a non-exhaustive list) of the computer-readable storage medium include an electrical connection having one or more wires, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In this context, the computer-readable storage medium may be any tangible medium that contains or stores a program for use by or in connection with an instruction execution system, apparatus, or device.

The computer-readable signal medium may include a propagated data signal with a computer-readable program code carried therein, for example, in a baseband or as part of a carrier wave. Such a propagated data signal may adopt a variety of forms, including, but not limited to: an electromagnetic signal, an optical signal, or any suitable combination of the foregoing. The computer-readable signal medium may be any computer-readable medium that is not a computer-readable storage medium and that may transmit, propagate, or transport a program for use by or in connection with an instruction execution system, apparatus, or device.

Program codes contained in the computer-readable medium may be transmitted using any appropriate medium, including but not limited to: wireless, wire, optic cable, radio frequency (RF), etc., or any suitable combination of the foregoing.

A computer program code for performing the operations of the present application may be written in one or more programming languages or combinations thereof, the described programming languages include an object-oriented programming language-such as Java, Smalltalk, C++, and further include a conventional procedural programming language-such as a "C" language or similar programming language. The program code may be executed in the following manners: executed entirely on a user's computer, executed partly on the user's computer, executed as an independent software package, executed partly on the user's computer and partly on a remote computer, or executed entirely on the remote computer or a server. In a case where the remote computer is involved, the remote computer may be connected to the user's computer through any kind of network, including a local area network (LAN) or a wide area network (WAN), or may be connected to an external computer (for example, connected to the external computer through an internet provided by an internet service provider).

## Claims

1. An item ex-warehouse method, comprising:
receiving and recording virtual warehouse location in-warehouse information of an item in a package stored at an express delivery station based on a cancel instruction of a first item acquisition task that is triggered by a user and is monitored and based on a determination result that the package corresponding to the first item acquisition task is in an undelivered state, wherein the express delivery station is used as a virtual warehouse location in a main warehouse where an item is initially ex-warehoused;
determining to ex-warehouse the item from the virtual warehouse location based on a generation instruction of a second item acquisition task that is triggered by the user and is monitored and based on a determination result that it is determined that the second item acquisition task includes the item and a package transportation route corresponding to the second item acquisition task includes the express delivery station; and
associating the item in the virtual warehouse location with the second item acquisition task, and associating virtual warehouse location ex-warehouse information of the item with the second item acquisition task.

2. The method of claim 1, wherein before determining to ex-warehouse the item from the virtual warehouse location, the method further comprises:
determining a time difference value between an item storage time when the item is stored at the express delivery station and an instruction acquisition time of the generation instruction; and
triggering performing the step of determining to ex-warehouse the item from the virtual warehouse location based on a determination result that the time difference value does not exceed a preset time threshold.

3. The method of claim 1, wherein before determining to ex-warehouse the item from the virtual warehouse location, the method further comprises:
triggering performing the step of determining to ex-warehouse the item from the virtual warehouse location based on a determination result that the virtual warehouse location is in a state of being available for ex-warehousing.

4. The method of claim 1, wherein before determining to ex-warehouse the item from the virtual warehouse location, the method further comprises:
determining whether the item stored at the virtual warehouse location is in a locked state; and
triggering performing the step of determining to ex-warehouse the item from the virtual warehouse location based on a determination result that the item stored at the virtual warehouse location is not in the locked state.

5. The method of claim 4, wherein before determining whether the item stored at the virtual warehouse location is in the locked state, the method further comprises:
determining whether an item state of the item is set to be in the locked state according to at least one of the following: an item quality identifier corresponding to the item, a user exclusive identifier, or whether the item is associated with an item acquisition task.

6. The method of claim 1, wherein determining that the package transportation route corresponding to the second item acquisition task includes the express delivery station comprises:
determining the package transportation route corresponding to the second item acquisition task includes the express delivery station based on a determination result that a delivery address in the second item acquisition task is same as a delivery address in the first item acquisition task.

7. The method of claim 1, wherein determining that the package transportation route corresponding to the second item acquisition task includes the express delivery station comprises:
determining the package transportation route corresponding to the second item acquisition task according to a delivery address in the second item acquisition task and a main warehouse address; and
determining that the package transportation route corresponding to the second item acquisition task includes the express delivery station based on a determination result that the express delivery station is in a coverage range of the package transportation route.

8. The method of claim 1, wherein after determining to ex-warehouse the item from the virtual warehouse location, the method further comprises:
recording in-warehouse information and ex-warehouse information of the item in warehouse storage record information corresponding to the main warehouse.

9. An item ex-warehouse apparatus, comprising:
an item storage module, which is configured to receive and record virtual warehouse location in-warehouse information of an item in a package stored at an express delivery station based on a cancel instruction of a first item acquisition task that is triggered by a user and is monitored and based on a determination result that the package corresponding to the first item acquisition task is in an undelivered state, wherein the express delivery station is used as a virtual warehouse location in a main warehouse where an item is initially ex-warehoused;
an item ex-warehouse module, which is configured to determine to ex-warehouse the item from the virtual warehouse location based on a generation instruction of a second item acquisition task that is triggered by the user and is monitored and based on a determination result that it is determined that the second item acquisition task includes the item and a package transportation route corresponding to the second item acquisition task includes the express delivery station; and
an information association module, which is configured to associate the item in the virtual warehouse location with the second item acquisition task, and associate virtual warehouse location ex-warehouse information of the item with the second item acquisition task.

10. An item ex-warehouse method, comprising:
triggering a cancel instruction of a first item acquisition task to enable a warehouse management system to receive and record virtual warehouse location in-warehouse information of an item in a package stored at an express delivery station based on a cancel instruction of a first item acquisition task that is triggered by a user and is monitored and based on a determination result that the package corresponding to the first item acquisition task is in an undelivered state, wherein the express delivery station is used as a virtual warehouse location in a main warehouse where an item is initially ex-warehoused;
triggering a generation instruction of a second item acquisition task to enable the warehouse management system to determine to ex-warehouse the item from the virtual warehouse location based on a generation instruction of a second item acquisition task that is triggered by the user and is monitored and based on a determination result that it is determined that the second item acquisition task includes the item and a package transportation route corresponding to the second item acquisition task includes the express delivery station, associate the item in the virtual warehouse location with the second item acquisition task, and associate virtual warehouse location ex-warehouse information of the item with the second item acquisition task.

11. A user terminal apparatus, comprising:
a first user operation module, which is configured to trigger a cancel instruction of a first item acquisition task to enable a warehouse management system to receive and record virtual warehouse location in-warehouse information of an item in a package stored at an express delivery station based on a cancel instruction of a first item acquisition task that is triggered by a user and is monitored and based on a determination result that the package corresponding to the first item acquisition task is in an undelivered state, wherein the express delivery station is used as a virtual warehouse location in a main warehouse where an item is initially ex-warehoused; and
a second user operation module, which is configured to trigger a generation instruction of a second item acquisition task to enable the warehouse management system to determine to ex-warehouse the item from the virtual warehouse location based on a generation instruction of a second item acquisition task that is triggered by the user and is monitored and based on a determination result that it is determined that the second item acquisition task includes the item and a package transportation route corresponding to the second item acquisition task includes the express delivery station, associate the item in the virtual warehouse location with the second item acquisition task, and associate virtual warehouse location ex-warehouse information of the item with the second item acquisition task.

12. An electronic device, comprising:
at least one processor; and
a storage apparatus, which is configured to store at least one program;
wherein the at least one program, when executed by the at least one processor, causes the at least one processor to perform the item ex-warehouse method of any one of claims 1 to 8 and claim 10.

13. A computer-readable storage medium, storing computer programs, wherein the computer programs, when executed by a processor, perform the item ex-warehouse method of any one of claims 1 to 8 and claim 10.

## Patentansprüche

1. Verfahren zur Auslagerung eines Artikels, das Folgendes umfasst:
Empfangen und Erfassen von Informationen über die Einlagerung an einem virtuellen Lagerort eines Artikels in einem Paket, das an einer Expresszustellstation gelagert ist, beruhend auf einer Stornierungsanweisung einer ersten Artikelerwerbsaufgabe, die von einem Benutzer ausgelöst wird und überwacht wird, und beruhend auf einem Feststellungsergebnis, dass das Paket, das der ersten Artikelerwerbsaufgabe entspricht, sich in einem nicht zugestellten Zustand befindet, wobei die Expresszustellstation als virtueller Lagerort in einem Hauptlager verwendet wird, wo ein Artikel anfangs ausgelagert wird,
Bestimmen, den Artikel aus dem virtuellen Lagerort auszulagern, beruhend auf einer Erzeugungsanweisung einer zweiten Artikelerwerbsaufgabe, die vom Benutzer ausgelöst wird und überwacht wird, und beruhend auf einem Feststellungsergebnis, dass festgestellt wird, dass die zweite Artikelerwerbsaufgabe den Artikel enthält und ein Pakettransportweg, der der zweiten Artikelerwerbsaufgabe entspricht, die Expresszustellstation enthält, und
Zuordnen des Artikels an dem virtuellen Lagerort zu der zweiten Artikelerwerbsaufgabe und Zuordnen von Informationen über die Auslagerung des Artikels aus dem virtuellen Lagerort zu der zweiten Artikelerwerbsaufgabe.

2. Verfahren nach Anspruch 1, wobei das Verfahren vor dem Bestimmen, den Artikel aus dem virtuellen Lagerort auszulagern, ferner Folgendes umfasst:
Bestimmen eines Zeitdifferenzwertes zwischen einem Artikellagerzeitpunkt, zu dem der Artikel an der Expresszustellstation gelagert wird, und einem Anweisungserfassungszeitpunkt der Erzeugungsanweisung, und
Auslösen der Durchführung des Schrittes des Bestimmens, den Artikel aus dem virtuellen Lagerort auszulagern, beruhend auf einem Feststellungsergebnis, dass der Zeitdifferenzwert einen voreingestellten Zeitschwellenwert nicht überschreitet.

3. Verfahren nach Anspruch 1, wobei das Verfahren vor dem Bestimmen, den Artikel aus dem virtuellen Lagerort auszulagern, ferner Folgendes umfasst:
Auslösen der Durchführung des Schrittes des Bestimmens, den Artikel aus dem virtuellen Lagerort auszulagern, beruhend auf einem Feststellungsergebnis, dass sich der virtuelle Lagerort in einem Zustand befindet, in dem er für die Auslagerung verfügbar ist.

4. Verfahren nach Anspruch 1, wobei das Verfahren vor dem Bestimmen, den Artikel aus dem virtuellen Lagerort auszulagern, ferner Folgendes umfasst:
Feststellen, ob sich der am virtuellen Lagerort gelagerte Artikel in einem gesperrten Zustand befindet, und
Auslösen der Durchführung des Schrittes des Bestimmens, den Artikel aus dem virtuellen Lagerort auszulagern, beruhend auf einem Feststellungsergebnis, dass sich der am virtuellen Lagerort gelagerte Artikel nicht im gesperrten Zustand befindet.

5. Verfahren nach Anspruch 4, wobei das Verfahren vor dem Feststellen, ob sich der am virtuellen Lagerort gelagerte Artikel im gesperrten Zustand befindet, ferner Folgendes umfasst:
Feststellen, ob ein Artikelzustand des Artikels gemäß wenigstens einem der folgenden auf den gesperrten Zustand gesetzt ist: einer dem Artikel entsprechenden Artikelqualitätskennung, einer Benutzerexklusivkennung, oder ob der Artikel einer Artikelerwerbsaufgabe zugeordnet ist.

6. Verfahren nach Anspruch 1, bei dem das Feststellen, dass der Pakettransportweg, der der zweiten Artikelerwerbsaufgabe entspricht, die Expresszustellstation enthält, Folgendes umfasst:
Feststellen, dass der Pakettransportweg, der der zweiten Artikelerwerbsaufgabe entspricht, die Expresszustellstation enthält, beruhend auf einem Feststellungsergebnis, dass eine Zustellanschrift in der zweiten Artikelerwerbsaufgabe die gleiche ist wie eine Zustellanschrift in der ersten Artikelerwerbsaufgabe.

7. Verfahren nach Anspruch 1, bei dem das Feststellen, dass der Pakettransportweg, der der zweiten Artikelerwerbsaufgabe entspricht, die Expresszustellstation enthält, Folgendes umfasst:
Bestimmen des Pakettransportwegs, der der zweiten Artikelerwerbsaufgabe entspricht, gemäß einer Zustellanschrift in der zweiten Artikelerwerbsaufgabe und einer Hauptlageranschrift, und
Feststellen, dass der Pakettransportweg, der der zweiten Artikelerwerbsaufgabe entspricht, die Expresszustellstation enthält, beruhend auf einem Feststellungsergebnis, dass die Expresszustellstation in einem Abdeckungsbereich des Pakettransportwegs liegt.

8. Verfahren nach Anspruch 1, wobei das Verfahren nach dem Bestimmen, den Artikel aus dem virtuellen Lagerort auszulagern, ferner Folgendes umfasst:
Erfassen von Einlagerungsinformationen und Auslagerungsinformationen des Artikels in Lagerspeicheraufzeichnungsinformationen, die dem Hauptlager entsprechen.

9. Vorrichtung zur Auslagerung eines Artikels, die Folgendes umfasst:
ein Artikelspeichermodul, das dazu eingerichtet ist, Informationen über die Einlagerung an einem virtuellen Lagerort eines Artikels in einem Paket, das an einer Expresszustellstation gelagert ist, beruhend auf einer Stornierungsanweisung einer ersten Artikelerwerbsaufgabe, die von einem Benutzer ausgelöst wird und überwacht wird, und beruhend auf einem Feststellungsergebnis, dass das Paket, das der ersten Artikelerwerbsaufgabe entspricht, sich in einem nicht zugestellten Zustand befindet, zu empfangen und zu erfassen, wobei die Expresszustellstation als virtueller Lagerort in einem Hauptlager verwendet wird, wo ein Artikel anfangs ausgelagert wird,
ein Artikelauslagerungsmodul, das dazu eingerichtet ist zu bestimmen, den Artikel aus dem virtuellen Lagerort auszulagern, beruhend auf einer Erzeugungsanweisung einer zweiten Artikelerwerbsaufgabe, die vom Benutzer ausgelöst wird und überwacht wird, und beruhend auf einem Feststellungsergebnis, dass festgestellt wird, dass die zweite Artikelerwerbsaufgabe den Artikel enthält und ein Pakettransportweg, der der zweiten Artikelerwerbsaufgabe entspricht, die Expresszustellstation enthält, und
ein Informationszuordnungsmodul, das dazu eingerichtet ist, den Artikel an dem virtuellen Lagerort der zweiten Artikelerwerbsaufgabe zuzuordnen und Informationen über die Auslagerung des Artikels aus dem virtuellen Lagerort der zweiten Artikelerwerbsaufgabe zuzuordnen.

10. Verfahren zur Auslagerung eines Artikels, das Folgendes umfasst:
Auslösen einer Stornierungsanweisung einer ersten Artikelerwerbsaufgabe, um es einem Lagerverwaltungssystem zu ermöglichen, beruhend auf einer Stornierungsanweisung einer ersten Artikelerwerbsaufgabe, die von einem Benutzer ausgelöst wird und überwacht wird, und beruhend auf einem Feststellungsergebnis, dass das Paket, das der ersten Artikelerwerbsaufgabe entspricht, sich in einem nicht zugestellten Zustand befindet, Informationen über eine Einlagerung an einem virtuellen Lagerort eines Artikels in einem Paket, das an einer Expresszustellstation gelagert ist, zu empfangen und zu erfassen, wobei die Expresszustellstation als virtueller Lagerort in einem Hauptlager verwendet wird, wo ein Artikel anfangs ausgelagert wird,
Auslösen einer Erzeugungsanweisung einer zweiten Artikelerwerbsaufgabe, um es dem Lagerverwaltungssystem zu ermöglichen zu bestimmen, den Artikel aus dem virtuellen Lagerort auszulagern, beruhend auf einer Erzeugungsanweisung einer zweiten Artikelerwerbsaufgabe, die vom Benutzer ausgelöst wird und überwacht wird, und beruhend auf einem Feststellungsergebnis, dass festgestellt wird, dass die zweite Artikelerwerbsaufgabe den Artikel enthält und ein Pakettransportweg, der der zweiten Artikelerwerbsaufgabe entspricht, die Expresszustellstation enthält, den Artikel am virtuellen Lagerort der zweiten Artikelerwerbsaufgabe zuzuordnen und Informationen über die Auslagerung des Artikels aus dem virtuellen Lagerort der zweiten Artikelerwerbsaufgabe zuzuordnen.

11. Benutzerendgerät, das Folgendes umfasst:
ein erstes Benutzerbedienmodul, das dazu eingerichtet ist, eine Stornierungsanweisung einer ersten Artikelerwerbsaufgabe auszulösen, um es einem Lagerverwaltungssystem zu ermöglichen, beruhend auf einer Stornierungsanweisung einer ersten Artikelerwerbsaufgabe, die von einem Benutzer ausgelöst wird und überwacht wird, und beruhend auf einem Feststellungsergebnis, dass das Paket, das der ersten Artikelerwerbsaufgabe entspricht, sich in einem nicht zugestellten Zustand befindet, Informationen über eine Einlagerung an einem virtuellen Lagerort eines Artikels in einem Paket, das an einer Expresszustellstation gelagert ist, zu empfangen und zu erfassen, wobei die Expresszustellstation als virtueller Lagerort in einem Hauptlager verwendet wird, wo ein Artikel anfangs ausgelagert wird, und
ein zweites Benutzerbedienmodul, das dazu eingerichtet ist, eine Erzeugungsanweisung einer zweiten Artikelerwerbsaufgabe auszulösen, um es dem Lagerverwaltungssystem zu ermöglichen zu bestimmen, den Artikel aus dem virtuellen Lagerort auszulagern, beruhend auf einer Erzeugungsanweisung einer zweiten Artikelerwerbsaufgabe, die vom Benutzer ausgelöst wird und überwacht wird, und beruhend auf einem Feststellungsergebnis, dass festgestellt wird, dass die zweite Artikelerwerbsaufgabe den Artikel enthält und ein Pakettransportweg, der der zweiten Artikelerwerbsaufgabe entspricht, die Expresszustellstation enthält, den Artikel am virtuellen Lagerort der zweiten Artikelerwerbsaufgabe zuzuordnen und Informationen über die Auslagerung aus dem virtuellen Lagerort des Artikels der zweiten Artikelerwerbsaufgabe zuzuordnen.

12. Elektronische Vorrichtung, die Folgendes umfasst:
wenigstens einen Prozessor und
ein Speichergerät, das dazu eingerichtet ist, wenigstens ein Programm zu speichern,
wobei das wenigstens eine Programm bei Ausführung durch den wenigstens einen Prozessor den wenigstens einen Prozessor dazu veranlasst, das Verfahren zur Auslagerung eines Artikels nach einem der Ansprüche 1 bis 8 und Anspruch 10 durchzuführen.

13. Computerlesbares Speichermedium, auf dem Computerprogramme gespeichert sind, wobei die Computerprogramme bei Ausführung durch einen Prozessor das Verfahren zur Auslagerung eines Artikels nach einem der Ansprüche 1 bis 8 und Anspruch 10 durchführen.

## Revendications

1. Procédé de sortie de stock d'un article, comprenant :
la réception et la saisie d'informations concernant une entrée en stock à un emplacement de stockage virtuel d'un article dans un paquet stocké à une station de livraison express, sur la base d'une instruction d'annulation d'une première tâche d'acquisition d'article qui est déclenchée par un utilisateur et est surveillée, et sur la base d'un résultat de détermination selon lequel le paquet correspondant à la première tâche d'acquisition d'article est dans un état non livré, dans lequel la station de livraison express est utilisée comme emplacement de stockage virtuel dans un entrepôt principal où un article est initialement sorti du stock,
la détermination d'effectuer une sortie de stock de l'article de l'emplacement de stockage virtuel sur la base d'une instruction de génération d'une deuxième tâche d'acquisition d'article déclenchée par l'utilisateur et surveillée, et sur la base d'un résultat de détermination selon lequel la deuxième tâche d'acquisition d'article contient l'article et qu'un itinéraire de transport de paquet correspondant à la deuxième tâche d'acquisition d'article contient la station de livraison express, et
l'association de l'article à l'emplacement de stockage virtuel à la deuxième tâche d'acquisition d'article et l'association des informations concernant une sortie de stock à l'emplacement de stockage virtuel de l'article à la deuxième tâche d'acquisition d'article.

2. Procédé selon la revendication 1, dans lequel avant la détermination d'effectuer une sortie de stock de l'article de l'emplacement de stockage virtuel, le procédé comprend en outre :
la détermination d'une valeur de différence de temps entre un moment de stockage d'article auquel l'article est stocké à la station de livraison express et un moment d'acquisition d'instruction de l'instruction de génération, et
le déclenchement de l'exécution de l'étape de détermination de la sortie de stock de l'article de l'emplacement de stockage virtuel sur la base d'un résultat de détermination selon lequel la valeur de différence de temps ne dépasse pas un seuil de temps prédéterminé.

3. Procédé selon la revendication 1, dans lequel avant la détermination d'effectuer une sortie de stock de l'article de l'emplacement de stockage virtuel, le procédé comprend en outre:
le déclenchement de l'exécution de l'étape de détermination de la sortie de stock de l'article de l'emplacement de stockage virtuel sur la base d'un résultat de détermination selon lequel l'emplacement de stockage virtuel est dans un état dans lequel il est disponible pour la sortie de stock.

4. Procédé selon la revendication 1, dans lequel avant la détermination d'effectuer une sortie de stock de l'article de l'emplacement de stockage virtuel, le procédé comprend en outre:
la détermination si l'article stocké à l'emplacement de stockage virtuel est dans un état bloqué, et
le déclenchement de l'exécution de l'étape de détermination de la sortie de stock de l'article de l'emplacement de stockage virtuel sur la base d'un résultat de détermination selon lequel l'article stocké à l'emplacement de stockage virtuel n'est pas dans un état bloqué.

5. Procédé selon la revendication 4, dans lequel avant la détermination si l'article stocké à l'emplacement de stockage virtuel est dans un état bloqué, le procédé comprend en outre :
la détermination si un état d'article de l'article est défini comme étant à l'état bloqué conformément à au moins l'un des éléments suivants : un identifiant de qualité d'article correspondant à l'article, un identifiant d'exclusivité d'utilisateur, ou si l'article est associé à une tâche d'acquisition d'article.

6. Procédé selon la revendication 1, dans lequel la détermination que l'itinéraire de transport de paquet correspondant à la deuxième tâche d'acquisition d'article contient la station de livraison express comprend :
la détermination que l'itinéraire de transport de paquet correspondant à la deuxième tâche d'acquisition d'article contient la station de livraison express, sur la base d'un résultat de détermination selon lequel une adresse de livraison dans la deuxième tâche d'acquisition d'article est la même qu'une adresse de livraison dans la première tâche d'acquisition d'article.

7. Procédé selon la revendication 1, dans lequel la détermination que l'itinéraire de transport de paquet correspondant à la deuxième tâche d'acquisition d'article contient la station de livraison express comprend :
la détermination de l'itinéraire de transport de paquet correspondant à la deuxième tâche d'acquisition d'article selon une adresse de livraison dans la deuxième tâche d'acquisition d'article et une adresse d'entrepôt principal, et
la détermination que l'itinéraire de transport de paquet correspondant à la deuxième tâche d'acquisition d'article contient la station de livraison express, sur la base d'un résultat de détermination selon lequel la station de livraison express est située dans une zone de recouvrement de l'itinéraire de transport de paquet.

8. Procédé selon la revendication 1, dans lequel après détermination de la sortie de stock de l'article de l'emplacement de stockage virtuel, le procédé comprend en outre :
la saisie des informations d'entrée en stock et des informations de sortie de stock de l'article dans des informations d'enregistrement de stockage d'entrepôt correspondant à l'entrepôt principal.

9. Dispositif de sortie de stock d'un article, comprenant :
un module de stockage d'articles réalisé de manière à recevoir et saisir des informations concernant une entrée en stock à un emplacement de stockage virtuel d'un article dans un paquet stocké à une station de livraison express, sur la base d'une instruction d'annulation d'une première tâche d'acquisition d'article qui est déclenchée par un utilisateur et est surveillée, et sur la base d'un résultat de détermination selon lequel le paquet correspondant à la première tâche d'acquisition d'article est dans un état non livré, dans lequel la station de livraison express est utilisée comme emplacement de stockage virtuel dans un entrepôt principal où un article est initialement sorti du stock,
un module de sortie de stock d'articles réalisé de manière à déterminer d'effectuer une sortie de stock de l'article de l'emplacement de stockage virtuel sur la base d'une instruction de génération d'une deuxième tâche d'acquisition d'article déclenchée par l'utilisateur et surveillée, et sur la base d'un résultat de détermination selon lequel la deuxième tâche d'acquisition d'article contient l'article et qu'un itinéraire de transport de paquet correspondant à la deuxième tâche d'acquisition d'article contient la station de livraison express, et
un module d'association d'informations réalisé de manière à associer l'article à l'emplacement de stockage virtuel à la deuxième tâche d'acquisition d'article et à associer des informations concernant une sortie de stock à l'emplacement de stockage virtuel de l'article à la deuxième tâche d'acquisition d'article.

10. Procédé de sortie de stock d'un article, comprenant :
le déclenchement d'une instruction d'annulation d'une première tâche d'acquisition d'article pour permettre à un système de gestion d'entrepôt de recevoir et saisir des informations concernant une entrée en stock à un emplacement de stockage virtuel d'un article dans un paquet stocké à une station de livraison express, sur la base d'une instruction d'annulation d'une première tâche d'acquisition d'article qui est déclenchée par un utilisateur et est surveillée, et sur la base d'un résultat de détermination selon lequel le paquet correspondant à la première tâche d'acquisition d'article est dans un état non livré, dans lequel la station de livraison express est utilisée comme emplacement de stockage virtuel dans un entrepôt principal où un article est initialement sorti du stock,
le déclenchement d'une instruction de génération d'une deuxième tâche d'acquisition d'article pour permettre au système de gestion d'entrepôt de déterminer d'effectuer une sortie de stock de l'article de l'emplacement de stockage virtuel sur la base d'une instruction de génération d'une deuxième tâche d'acquisition d'article déclenchée par l'utilisateur et surveillée, et sur la base d'un résultat de détermination déterminant que la deuxième tâche d'acquisition d'article contient l'article et qu'un itinéraire de transport de paquet correspondant à la deuxième tâche d'acquisition d'article contient la station de livraison express, d'associer l'article à l'emplacement de stockage virtuel à la deuxième tâche d'acquisition d'article et d'associer des informations concernant une sortie de stock à l'emplacement de stockage virtuel de l'article à la deuxième tâche d'acquisition d'article.

11. Terminal utilisateur comprenant :
un premier module de commande utilisateur réalisé de manière à déclencher une instruction d'annulation d'une première tâche d'acquisition d'article pour permettre à un système de gestion d'entrepôt de recevoir et saisir des informations concernant une entrée en stock à un emplacement de stockage virtuel d'un article dans un paquet stocké à une station de livraison express, sur la base d'une instruction d'annulation d'une première tâche d'acquisition d'article qui est déclenchée par un utilisateur et est surveillée, et sur la base d'un résultat de détermination selon lequel le paquet correspondant à la première tâche d'acquisition d'article est dans un état non livré, dans lequel la station de livraison express est utilisée comme emplacement de stockage virtuel dans un entrepôt principal où un article est initialement sorti du stock, et
un deuxième module de commande utilisateur réalisé de manière à déclencher une instruction de génération d'une deuxième tâche d'acquisition d'article pour permettre au système de gestion d'entrepôt de déterminer d'effectuer une sortie de stock de l'article de l'emplacement de stockage virtuel sur la base d'une instruction de génération d'une deuxième tâche d'acquisition d'article déclenchée par l'utilisateur et surveillée, et sur la base d'un résultat de détermination déterminant que la deuxième tâche d'acquisition d'article contient l'article et qu'un itinéraire de transport de paquet correspondant à la deuxième tâche d'acquisition d'article contient la station de livraison express, à associer l'article à l'emplacement de stockage virtuel à la deuxième tâche d'acquisition d'article et à associer des informations concernant une sortie de stock à l'emplacement de stockage virtuel de l'article à la deuxième tâche d'acquisition d'article.

12. Dispositif électronique comprenant :
au moins un processeur et
un appareil de stockage réalisé de manière à stocker au moins un programme,
dans lequel ledit au moins un programme, lorsqu'il est exécuté par ledit au moins un processeur, amène ledit au moins un processeur à exécuter le procédé de sortie de stock d'un article selon l'une des revendications 1 à 8 et la revendication 10.

13. Support de stockage lisible par ordinateur sur lequel sont stockés des programmes informatiques, les programmes informatiques, lorsqu'ils sont exécutés par un processeur, mettant en œuvre le procédé de sortie de stock d'un article selon l'une des revendications 1 à 8 et la revendication 10.
